# EUROPÄISCHE PATENTSCHRIFT

(11) **EP 2 228 300 B1**
(45) Veröffentlichungstag und Bekanntmachung des Hinweises auf die Patenterteilung: **08.03.2017**
(21) Anmeldenummer: 10155936.7
(22) Anmeldetag: 09.03.2010
(51) Int. Cl.: B64C 27/72

(54) **AKTIVE ROTORBLATTANORDNUNG**
ACTIVE ROTOR BLADE ASSEMBLY
AGENCEMENT DE PALE DE ROTOR ACTIF

(30) Priorität: 13.03.2009 DE 102009012799
(43) Veröffentlichungstag der Anmeldung: 15.09.2010
(73) Patentinhaber: Airbus Defence and Space GmbH, 85521 Ottobrunn (DE)
(72) Erfinder: Grohmann, Boris, 81247 München (DE); Storm, Stefan, 85716 Unterschleissheim (DE)
(74) Vertreter: Kopf Westenberger Wachenhausen Patentanwälte PartG mbB

(56) Entgegenhaltungen:
- DE-B4- 10 304 530
- US-A1- 2007 205 332
- ANDREAS P F BERNHARD ET AL: "Analysis of a bending-torsion coupled actuator for a smart rotor with active blade tips", SMART MATERIALS AND STRUCTURES, IOP PUBLISHING LTD., BRISTOL, GB, Bd. 10, Nr. 1, 1. Februar 2001 (2001-02-01), - 1. Februar 2001 (2001-02-01), Seiten 35-52, XP020071444, ISSN: 0964-1726, DOI: 10.1088/0964-1726/10/1/304
- RODGERS J P ET AL: "Preliminary Mach-scale hover testing of an integral twist-actuated rotor blade", PROCEEDINGS OF SPIE, S P I E - INTERNATIONAL SOCIETY FOR OPTICAL ENGINEERING, US, Bd. 3329, 1. Januar 1998 (1998-01-01), - 1. Januar 1998 (1998-01-01), Seiten 291-308, XP002389450, ISSN: 0277-786X, DOI: 10.1117/12.316901

## Beschreibung

### Gebiet der Erfindung

Die Erfindung betrifft ein Rotorblatt für einen Helikopter, insbesondere ein Rotorblatt für einen Helikopter mit einer Rotorblattaktuatoranordnung zum Verformen einer flexiblen Rotorblattdecke, sowie einen Rotorblattaktuator zum Verformen einer flexiblen Rotorblattdecke.

### Hintergrund der Erfindung

Bei Rotoren von Helikoptern kommt es aufgrund der Rotationsgeschwindigkeit der Rotoren zu einer Interaktion von Blattspitzenwirbeln mit den nachlaufenden Blättern, die zu einer Lärmentwicklung führen. Ferner können Teile des Rotors insbesondere bei einem Vorwärtsflug zu hohen Machzahlen führen, die ebenfalls zu einer Lärmentwicklung führen können. Im Allgemeinen sind Rotorblätter im Vorwärtsflug starken Vibrationen ausgesetzt, die zudem zu einer starken Materialbeanspruchung führen können.

Die US 2007/205332 A1 beschreibt ein Rotorsystem mit einem gestapelten Aktuatoren-System zum Erzeugen von Torsionen in einem Rotorblatt.

Die Druckschrift von Andreas P. F. Bernhard et al., mit dem Titel: "Analysis of a bending-torsion coupled actuator for a smart rotor with active blade tips", erschienen im Journal "Smart Materials and Structures", am 1. Februar 2001, im Band 10, Ausgabe Nr. 1, auf den Seiten 35 bis 52, beschreibt einen Torsions-gekoppelten Aktuator für ein Rotorblatt mit aktiven Blattspitzen.

Die Druckschrift von J.P. Rodgers et al., mit dem Titel: "Preliminary Mach-Scale hover testing of an integral twist-actuated rotor blade", erschienen im Journal "Proceedings of SPIE - SPIE the international society for optical engineering", am 1. Februar 2001, im Band Nr. 3329, auf den Seiten 291-301, beschreibt eine Erprobung eines integriert aufgebauten und über ein intern erzeugtes Torsionsmoment gesteuerten Rotorblatts.

Im Stand der Technik wird den diesbezüglichen Problemen durch beispielsweise eine entsprechende Ausgestaltung der Blattspitzen begegnet, beispielsweise durch eine gepfeilte Blattspitze mit einer besonderen Geometrie.

Weiterhin wird im Stand der Technik vorgeschlagen, beispielsweise eine diskrete Klappe in der Blattspitze vorzusehen, um auf diese Weise eine Beeinflussung des Blattspitzenwirbels vornehmen zu können, so wie sie beispielsweise in US 6,461,106 B1 beschrieben ist.

Darüberhinaus ist aus dem Stand der Technik aus DE 103 04 530 B4 ein mittels Piezoaktuatoren verformbares Flügelprofil bekannt.

### Zusammenfassung der Erfindung

Es kann als eine Aufgabe der vorliegenden Erfindung betrachtet werden, eine Anordnung anzugeben, die bei Rotorblättern zu einer verminderten Schallentwicklung, zu einer verminderten Antriebsleistung bzw. zu einer verminderten Vibration führt.

Die vorliegende Aufgabe wird gelöst durch den Gegenstand des unabhängigen Anspruchs 1, wobei beispielhafte Ausgestaltungen durch die abhängigen Ansprüche verkörpert werden.

Gemäß der Erfindung ist ein Rotorblattaktuator vorgesehen mit einer Aktuatoroberfläche, die ausgelegt ist zum Applizieren auf einer Oberfläche eines Rotorblattes, einer steuerbaren aktiven ersten Schicht, die parallel zu der Aktuatoroberfläche angeordnet ist, wobei die erste Schicht eine Ansteuerbarkeit aufweist, die bei einer Ansteuerung eine Längenänderung in eine erste Richtung entlang der Aktuatoroberfläche hervorruft, einer über der ansteuerbaren ersten Schicht angeordneten ansteuerbaren aktiven
zweiten Schicht, wobei die zweite Schicht eine Ansteuerbarkeit aufweist, die bei einer Ansteuerung eine Längenänderung in eine zweite Richtung entlang der Aktuatoroberfläche hervorruft, wobei die erste Schicht und die zweite Schicht derart miteinander gekoppelt sind, dass der Rotorblattaktuator bei einer Längenänderung in eine erste Richtung und eine davon verschiedene Längenänderung in eine zweite Richtung eine veränderte Krümmung der Aktuatoroberfläche aufweist, wobei der Rotorblattaktuator ausgelegt ist, in einem applizierten Zustand durch die Längenänderung eine Verformung der Oberfläche eines Rotorblattes hervorzurufen. Die Aktuatoren können beispielsweise als Piezoaktuatoren ausgeführt sein. Vorzugsweise wird dabei der d33-Effekt in der ersten Richtung ausgenutzt. Die Aktuatoren können als sogenannte Stack-Aktuatoren oder mit interdigitalen Elektroden (interdigitated electrodes, IDE) ausgeführt sein.

Auf diese Weise kann der Rotorblattaktuator direkt auf die Oberfläche einer Rotorblattdecke appliziert werden, um bei einer Betätigung eine Verformung einer flexiblen Rotorblattdecke hervorzurufen. Ein Applizieren kann dabei sowohl auf der Außenoberfläche des Rotorblattes erfolgen als auch auf einer innenliegenden Oberfläche einer flexiblen Rotorblattdecke, so dass der Aktuator im Inneren des Rotorblattes liegt und somit den äußeren Einflüssen nicht ausgesetzt ist. Bei einer Anordnung des Aktuators im Inneren des Blattes, zum Beispiel in der Symmetrieebene oder in der Profilsehne, kann ein guter Schutz vor Umgebungseinflüssen erreicht werden sowie eine hohe mechanische Wirksamkeit bei gegebenem E-Modul und einer geringen aktiven Dehnung.

Darüber hinaus kann ein Aktuator erhalten werden, der eine Verformung nicht nur im applizierten Zustand hervorruft, sondern auch im nicht applizierten Zustand. Dies ist insbesondere für Anwendungsfälle von Bedeutung, in denen das zu verformende flexible Rotorblatt bzw. die zu verformende flexible Rotorblattdecke eine derart hohe Elastizität aufweist, dass sie der Längenänderung eines einschichtigen Aktuators folgt, ohne dabei eine ausreichende Krümmung der Oberfläche hervorzurufen.

Mittels eines zweilagigen Aktuators kann jedoch der Aktuator selbst bei Betätigung eine Krümmung erfahren und auch hoch elastische oder flexible Oberflächen krümmen, ohne auf die Materialeigenschaften der Rotorblattdecke angewiesen zu sein.

Gemäß einer beispielhaften Ausführungsform der Erfindung weist der Rotorblattaktuator eine passive dritte Schicht auf, die zwischen der ersten Schicht und der zweiten Schicht angeordnet ist.

Eine derartige dritte Schicht kann beispielsweise aus einer glasfaserverstärkten oder kohlefaserverstärkten Kunststoffplatte bestehen, so dass ein widerstandsfähiges, jedoch elastisches Substrat verfügbar ist, um eine Verformbarkeit des Aktuators in unterschiedliche Richtungen zu gewährleisten. Insbesondere kann eine solche Trägerschicht Aktuatoren aus brüchigem Material, etwa Piezokeramik, vor einem unbeabsichtigten Bruch schützen.

Ferner lässt sich auf diese Weise die Applizierung der aktiven Schichten des Aktuators verbessern, da das Substrat als passive dritte Schicht entsprechend vorbereitet werden kann, um beispielsweise Klebstoffe aufzunehmen, mittels denen die erste bzw. zweite Schicht auf die passive dritte Schicht aufgebracht werden kann.

Gemäß einer beispielhaften Ausführungsform der Erfindung weist der Rotorblattaktuator eine passive vierte Schicht auf, die auf einer der zweiten Schicht abgewandten Seite der ersten Schicht angeordnet ist.

Mittels einer derartigen passiven vierten Schicht kann die Applizierung auf der Rotorblattdecke optimiert werden, insbesondere um entsprechende Verklebungen zuverlässig ausführen zu können. Die Aktuatoren selbst können dabei unter hohen Qualitätsstandards gefertigt werden, um sie anschließend in fertigen Aktuatorkomponenten auf oder an einer Rotorblattdecke applizieren zu können.

Insbesondere kann die Applizierungsfläche an dem Rotorblattaktuator bereits für eine einfache und zuverlässige Endmontage vorbereitet sein, ohne den ganzen Aktuator unter den Endfertigungsbedingungen fertigen zu müssen.

Gemäß einer beispielhaften Ausführungsform der Erfindung sind die erste Richtung und die zweite Richtung orthogonal zueinander.

Auf diese Weise kann eine verstärkte Torsion bzw. dreidimensionale Verwölbung hervorgerufen werden, dadurch dass sich die Verformung der ersten Aktuatorschicht in die eine Richtung und die Verformung der zweiten Aktuatorschicht in die orthogonale Richtung überlagern. Auf diese Weise kann die Schubverformung verstärkt werden.

Gemäß der Erfindung wird ein Rotorblatt für einen Helikopter bereitgestellt mit einer flexiblen Rotorblattdecke und einer

Rotorblattaktuatoranordnung, wobei die Rotorblattaktuatoranordnung in einem Bereich entlang des Rotorblattes an die flexible Rotorblattdecke angekoppelt ist und derart ausgelegt ist, dass die flexible Rotorblattdecke bei einer Betätigung der Rotorblattaktuatoranordnung bezogen auf eine Spannweite eines Rotors eines Helikopters in einem ersten Bereich an einer Rotorblattspitze in eine vertikale Richtung verformbar ist.

Auf diese Weise kann eine flexible Rotorblattdecke aktiv verformt werden und einer Vibrations- bzw. Lärmentwicklung entgegengewirkt werden. Mit anderen Worten kann die Rotorblattdecke derart aktiv und dynamisch verformt werden, dass beispielsweise einer Vibration entgegengewirkt wird, sodass auf diese Weise die Vibration kompensiert werden kann. Durch Anpassung der Rotorblattgeometrie ist ausserdem eine zeitlich veränderliche Optimierung der Aerodynamnik und dadurch eine Verminderung der benötigten Rotorantriebsleistung erzielbar. Ferner kann einer entsprechenden Schallentwicklung durch eine aktive Verformung der Rotorblattdecke entgegengewirkt werden.

Aufgrund des größten radialen Abstandes von der Drehachse ist die Rotorblattspitze den stärksten Strömungen und Kräften ausgesetzt, so dass an der Rotorblattspitze die stärksten aerodynamischen Wirkungen, Vibrationen bzw. Schallentwicklungen zu erwarten sind. Aufgrund dessen werden durch eine entsprechende Anordnung einer Rotorblattaktuatoranordnung an der Rotorblattspitze Verformungen insbesondere in Form von Vibrationen entgegengewirkt, um an der Stelle der stärksten Beanspruchung eine Kompensierung von Vibrationen erreichen zu können, im Bereich hoher Anströmgeschwindigkeiten geringen Strömungswiderstand bzw. an den Stellen der erwarteten stärksten Schallentwicklung eine Schallminimierung herbeiführen zu können.

Gemäß einer beispielhaften Ausführungsform der Erfindung ist die flexible Rotorblattdecke dreidimensional verformbar, und die Rotorblattaktuatoranordnung ist derart ausgelegt und an die flexible Rotorblattdecke angekoppelt, dass die flexible Rotorblattdecke bei einer Betätigung der Rotorblattaktuatoranordnung dreidimensional verformbar ist.

Unter einer dreidimensionalen Verformbarkeit ist eine Verformung zu verstehen, die eine Wölbung nicht nur über eine Achse erfährt, sondern eine beliebige Wölbung der Oberfläche darstellt. Durch eine derartige dreidimensionale Verformbarkeit kann Vibrationen entgegengewirkt werden, die sowohl auf Rotorblattorsion in Spannweitenrichtung, Schlagbiegung senkrecht zur Rotorblattebene, Schwenkbiegung in lateraler Richtung oder Verformungen bzw. Verwölbungen der Profilgeometrie beruhen. Eine derartige Verformung kann beispielsweise durch zwei Aktuatoren hervorgerufen werden, die eine Betätigungsrichtung aufweisen, die in einem Winkel zueinander angeordnet sind.

Gemäß einer beispielhaften Ausführungsform der Erfindung ist die flexible Rotorblattdecke tordierend verformbar und die Rotorblattaktuatoranordnung derart ausgelegt und an die flexible Rotorblattdecke angekoppelt, dass die flexible Rotorblattdecke bei einer Betätigung der Rotorblattaktuatoranordnung tordierend verformbar ist.

Aufgrund der Tatsache, dass ein Rotorblatt an einen Rotor einseitig fixiert ist, führen angreifende Kräfte beispielsweise durch eine Anströmung oftmals zu einer tordierenden Verformung des Rotorblattes bzw. der Rotorblattdecke, so dass durch eine entsprechende gegenwirkende aktive Betätigung durch einen Rotorblattaktuator einer derartigen tordierenden Verformung entgegengewirkt werden kann, um auf diese Weise Vibrationen und Schallentwicklungen entgegenwirken zu können.

Gemäß einer beispielhaften Ausführungsform der Erfindung ist die flexible Rotorblattdecke in einem Bereich zwischen einer Rotorblattspitze und einer Rotorblattwurzel bezogen auf eine Spannweite tordierend verformbar und die Rotorblattaktuatoranordnung derart ausgelegt und an einem Bereich zwischen einer Rotorblattspitze und einer Rotorblattwurzel angekoppelt, dass die flexible Rotorblattdecke bei einer Betätigung der Rotorblattaktuatoranordnung bezogen auf eine Spannweite tordierend verformbar ist.

Aufgrund der an einer Rotorblattspitze angreifenden Kräfte und einer festen Ankopplung einer Rotorblattwurzel an den Rotor führt eine Anströmung insbesondere im Bereich der Rotorblattspitze häufig zu einer tordierenden Verformung bzw. zu einer Vibration aufgrund einer tordierenden Schwingung, so dass mit einer Rotorblattaktuatoranordnung, die eine flexible Rotorblattdecke tordierend verformen kann, einer derartigen tordierenden Schwingung entgegengewirkt werden kann. Dabei ist eine feste Ankopplung des Rotorblattes an den Rotor dahingehend zu verstehen, dass bei einer Anströmung sich die Rotorblattspitze bezogen auf die Rotorblattwurzel bewegt, die Rotorblattwurzel jedoch dieser Bewegung ungeachtet der zyklischen Betätigung im Flugbetrieb nicht folgen kann.

Dies erlaubt einen strömungsdynamisch optimierten Übergang zwischen einer Rotorblattspitze, die sich in vertikale Richtung verformt und einer Verformung einer Rotorblattdecke in einem Mittelbereich des Rotorblattes, wo eine Verformung im Wesentlichen des Profilquerschnittes erfolgt. Zu diesem Zweck wird die Rotorblattdecke in einer Querrichtung in einer Drehebene verformt. In einem dazwischenliegenden Bereich kann durch eine tordierende Verformung ein strömungstechnisch optimierter Übergang zwischen den beiden Bereichen geschaffen werden.

Gemäß einer beispielhaften Ausführungsform der Erfindung weist das erfindungsgemäße Rotorblatt eine Rotorblattaktuatoranordnung auf mit einem erfindungsgemäßen Rotorblattaktuator.

Gemäß einer beispielhaften Ausführungsform der Erfindung wird ein Helikopter bereitgestellt mit einem erfindungsgemäßen Rotorblatt.

Es sollte bemerkt werden, dass sich die im Folgenden beschriebenen Ausführungsformen der Erfindung gleichermaßen auf den Rotorblattaktuator als auch das Rotorblatt beziehen können.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen. Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Figur 1 zeigt eine Ansicht eines Rotorblattes mit unterschiedlichen Aktuatoranordnungen.
Figur 2 zeigt eine beispielhafte Ausführungsform eines Rotorblattaktuators mit einer aktiven Schicht.
Figur 3 zeigt eine beispielhafte Ausführungsform eines Rotorblattaktuators mit zwei aktiven Schichten.
Figur 4 zeigt eine beispielhafte Ausführungsform eines Rotorblattaktuators mit zwei aktiven Schichten sowie einer dritten Zwischenschicht und einer vierten Substratschicht.
Figur 5 zeigt eine beispielhafte Ausführungsform eines applizierten Rotorblattaktuators mit zwei Aktuatorschichten, die eine antiparallele Betätigungsrichtung aufweisen.
Figur 6 zeigt eine beispielhafte Ausführungsform eines zweischichtigen Rotorblattaktuators, mit einem zweischichtigen Aufbau, für eine tordierende Verformung.
Figur 7 zeigt eine Auswahl von unterschiedlichen Aktuatorformen und Arten.
Figur 8 zeigt einen Helikopter gemäß einer beispielhaften Ausführungsform der Erfindung.

### Detaillierte Beschreibung beispielhafter Ausführungsformen

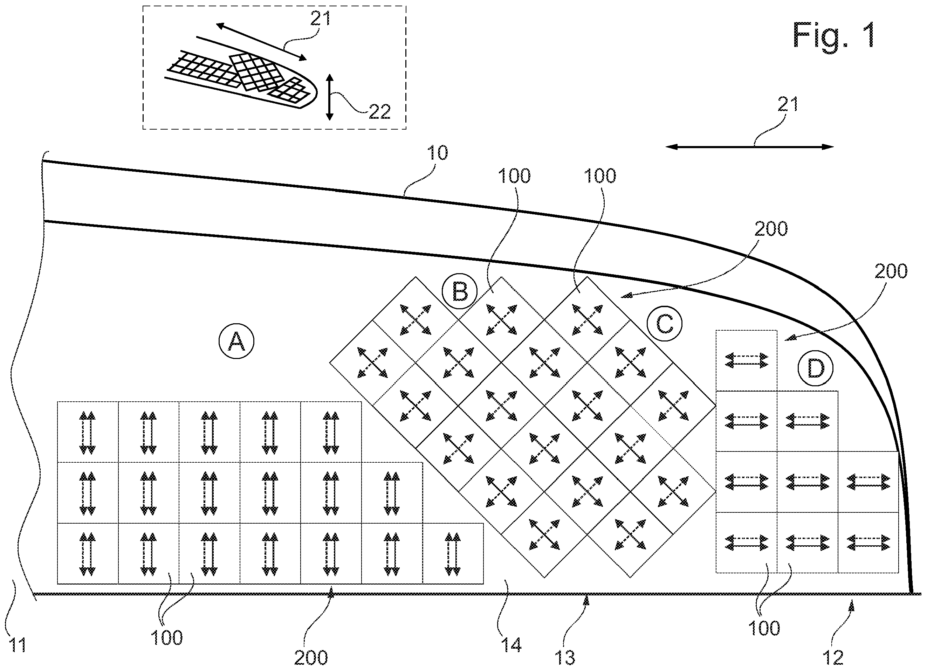

Figur 1 zeigt eine beispielhafte Ausführungsform eines Rotorblattes bzw. einer Rotorblattdecke. Auf der Rotorblattdecke bzw. auf einer innenliegenden Fläche des Rotorblattes sind eine Anzahl unterschiedlicher Rotorblattaktuatoranordnungen aufgebracht, die zu unterschiedlichen Effekten einer Verformung eines Rotorblattes bzw. einer Rotorblattdecke führen. Unter einer Aktuatoranordnung ist die Anordnung einer Vielzahl von Aktuatoren zu verstehen, wobei ein Aktuator ebenfalls wieder eine Aktuatoranordnung einer Vielzahl von Teilaktuatoren ist.

Um eine aerodynamische Wirkung einer aktiven Rotorblattdecke zu erzielen, sind unterschiedliche Verformungen notwendig bzw. gewünscht. Zum einen ist eine Verwölbung des Profils der Blattspitze in eine Tiefenrichtung gewünscht für eine sogenannte aerodynamische Verwindung. Ferner ist eine Torsion gewünscht für eine sogenannte geometrische Verwindung, und schließlich ist eine Biegung insbesondere der Blattspitze in eine Spannweitenrichtung gewünscht. Für diese unterschiedlichen Verformungen sind unterschiedliche Aktuatorbereiche vorgesehen. Beispielsweise wird die flexible Rotorblattdecke bzw. innenliegende Aktuatorfläche 14 im Bereich der Blattspitze 12 mit Aktuatoren im Bereich D versehen, die eine Biegung in Spannweitenrichtung 21 hervorrufen können. Dabei sind die Aktuatoren in der in Figur 1 gezeigten Anordnung jeweils mit zwei Pfeilen gekennzeichnet, von denen der eine Pfeil mit durchgezogener Linie eine erste Betätigungsrichtung und der zweite Pfeil mit einer gestrichelten Linie die zweite Betätigungsrichtung symbolisiert. Die im Bereich D angeordneten Aktuatoren 100 weisen eine Betätigungsrichtung in Spannweitenrichtung 21 auf, so dass bei einer Betätigung eine Verbiegung in Spannweitenrichtung erfolgt. Bei einer Betätigung der Aktuatoren 100 im Bereich D erfolgt somit eine Verbiegung der Rotorblattspitze 12 in Spannweitenrichtung, so dass die Rotorblattspitze entweder nach oben oder nach unten gewölbt werden kann, um entsprechenden Vibrationen bzw. Geräuschentwicklungen entgegenwirken zu können. Die Aktuatoranordnung 200 mit den Rotorblattaktuatoren 100 im Bereich A ist in Richtung der Blattwurzel 11 angeordnet und kann eine Verbiegung der Blattdecke bzw. der innenliegenden Aktuatorfläche in Tiefenrichtung, das heißt azimutaler Richtung hervorrufen, um auf diese Weise eine aerodynamische Verwindung hervorzurufen. Im Bereich der Blattwurzel 11 und der Blattspitze 12 sind die Aktuatoren 100 der Aktuatoranordnung 200 in den Bereichen B und C so angeordnet, dass sie eine Torsionsverformung vornehmen können. Zu diesem Zweck sind die Aktuatoren 100 als zweischichtige Aktuatoren ausgeführt, die Betätigungsrichtungen haben, die zueinander verschieden sind. Auf diese Weise kann jeder Aktuator 100 der Aktuatoranordnung 200 der Bereiche B und C eine Torsionsverformung derart vornehmen, dass der Bereich der Blattdecke tordierend verformt wird. Die Rotorblattvorderkante 10 kann dabei starr ausgeführt sein, um eine entsprechende Stabilität des Rotorblattes zu gewährleisten. In diesem Fall erfolgt die Verformung lediglich in dem flexiblen Bereich der Rotorblattdecke bzw. der innenliegenden Aktuatorfläche 14. Die Anordnung der Aktuatoren 100 ist selbstverständlich nicht auf die hier gezeigten Ausführungsformen der Bereiche A, B, C und D beschränkt, sondern kann auch beliebig unterschiedlich ausgeführt sein. Insbesondere können die für eine Torsion zuständigen Aktuatoren auch in Bereichen vorgesehen sein, die weiter zur Blattwurzel 11 bzw. weiter zur Blattspitze 12 gerichtet sind. Auf diese Weise kann eine anisotrope Aktuation im Bereich der Rotorblattdecke, insbesondere der Rotorblattspitze hervorgerufen werden, so dass sowohl eine Verbiegung mit einer einfachen Krümmung in azimutaler Richtung 22 an der eigentlichen Rotorblattspitze 12 erfolgen kann, eine Biegung in einem Bereich, der weiter zur Rotorblattwurzel 11 angeordnet ist, hier im Bereich A, als auch eine tordierende Verformung in einem Übergangsbereich 13 zwischen der Rotorblattwurzel 11 und der Rotorblattspitze 12, hier im Bereich B und C.

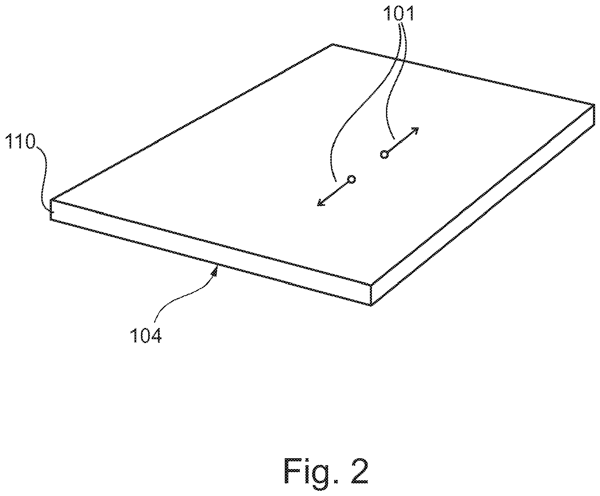

Figur 2 zeigt eine beispielhafte Ausführungsform eines Aktuators 100 in einer rudimentären Form. Der Aktuator besteht aus einer ersten Schicht 110, die in eine erste Richtung 101 verformbar ist. Ferner weist der Aktuator eine Oberfläche 104 auf, mittels derer der Aktuator 100 auf einer Rotorblattdecke appliziert werden kann. Ein derartiger in Figur 2 gezeigter Aktuator führt in einem nicht applizierten Zustand lediglich zu einer Längenänderung 101. Erst in einem applizierten Zustand führt die Betätigung des Aktuators zu einer Verwölbung, insbesondere wenn die Oberfläche, auf der der Aktuator appliziert wird, eine gewisse Verformbarkeit aufweist, jedoch eine ausreichende Festigkeit, um den entstehenden Schubkräften entgegenzuwirken. Die Aktuatoren können beispielsweise als Piezoaktuatoren ausgeführt sein. Vorzugsweise wird dabei der d33-Effekt in der ersten Richtung ausgenutzt. Die Aktuatoren können als sogenannte Stack-Aktuatoren oder mit interdigitalen Elektroden (interdigitated electrodes, IDE) ausgeführt sein.

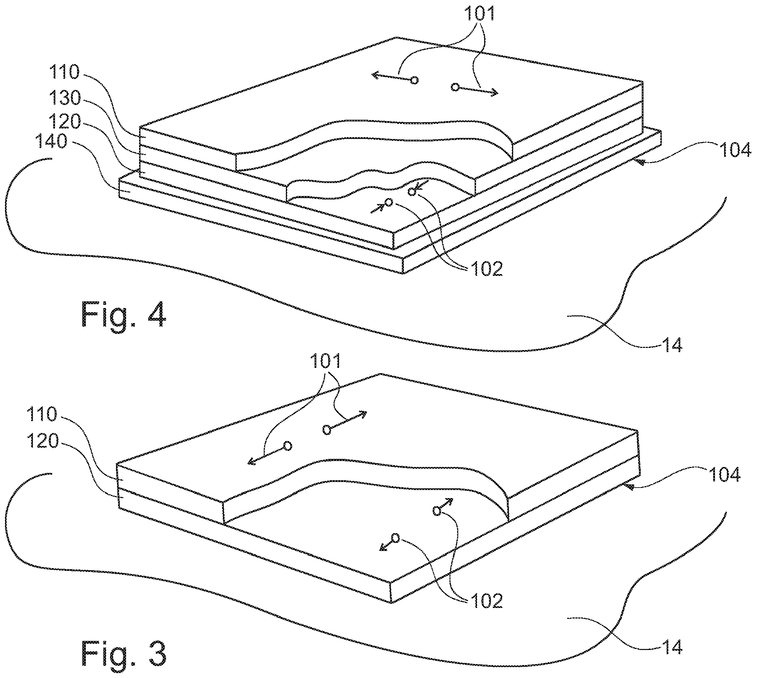

Figur 3 zeigt eine beispielhafte Ausführungsform eines Aktuators 100 in einer zweilagigen Ausführung. Der in Figur 3 gezeigte Aktuator weist eine erste Schicht 110 auf, die in eine erste Richtung 101 verformbar ist. Ferner weist der Aktuator eine zweite Schicht 120 auf, die in eine zweite Richtung 102 verformbar ist. Dabei sind die Verformung in der ersten Richtung 101 und die Verformung in der zweiten Richtung 102 unterschiedlich, so dass bei entsprechend zusammengefügten Schichten 110 und 120 eine Verbiegung des Aktuators um eine Krümmungsachse herum erfolgt. Die Verformungsrichtungen 101, 102 sind in der in Figur 3 gezeigten Ausführungsform zwar parallel und gleichgerichtet, weisen jedoch einen unterschiedlichen Ausdehnungsgrad auf, der zu bei einer Betätigung der Aktuatorschichten zu einer Krümmung führt. Bei einer entsprechenden Applizierung des Aktuators auf einer Rotorblattdecke 14, etwa über die Oberfläche 104, führt die entsprechende Verbiegung des Aktuators zu einer Verbiegung der Rotorblattdecke 14.

Figur 4 zeigt eine beispielhafte Ausführungsform eines Aktuators, der zwischen der ersten Schicht 110 und der zweiten Schicht 120 eine dritte Schicht 130 aufweist, die jedoch im Gegensatz zu den Schichten 110 und 120 keine aktive, sondern eine passive Schicht ist. Diese passive Schicht 130 kann beispielsweise aus einem glasfaserverstärkten Kunststoff oder einem kohlefaserverstärkten Kunststoff bestehen, der als ein entsprechendes Substrat zum Applizieren der aktiven Schichten 110 und 120 dient. Die in Figur 4 gezeigten Verformungsrichtungen 101 und 102 sind unterschiedlich zueinander, so dass bei einer Betätigung sowohl der aktiven Schicht 110 als auch der aktiven Schicht 120 eine Torsionsverformung des Aktuators 100 hervorgerufen wird. Ferner ist bei der hier gezeigten Aktuatoranordnung eine vierte Schicht 140 vorgesehen, die mit einer Oberfläche 104 versehen ist, die ausgelegt zum Applizieren auf einer Rotorblattdecke 14. Es sei an dieser Stelle angemerkt, dass die passive dritte Schicht 130 und/oder die passive vierte Schicht 140 sowohl bei gleichgerichteten Verformungsrichtungen 101, 102 als auch unterschiedlichen Verformungsrichtungen 101, 102 vorgesehen sein kann.

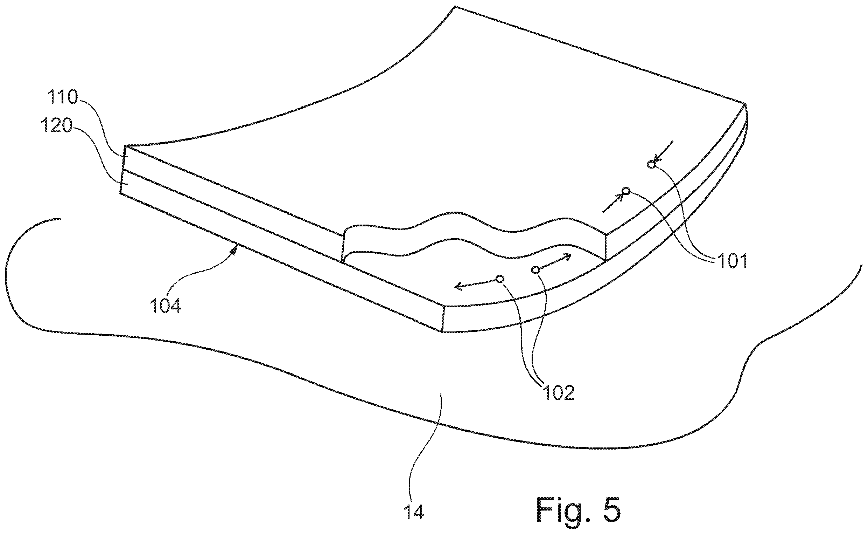

Figur 5 zeigt eine beispielhafte Ausführungsform eines zweischichtigen Aktuators mit einer ersten aktiven Schicht 110 sowie einer zweiten aktiven Schicht 120. Der Aktuator 100 ist mit einer entsprechenden Oberfläche 104 auf der Rotorblattdecke 14 aufgebracht und befestigt. Die Verformungsrichtungen 101, 102 sind in der in Figur 5 gezeigten Ausführungsform antiparallel zueinander, so dass sich eine verstärkte Verformung bzw. Krümmung um eine Krümmungsachse einstellt, wenn die erste aktive Schicht 110 bzw. die zweite aktive Schicht 120 parallel betätigt werden.

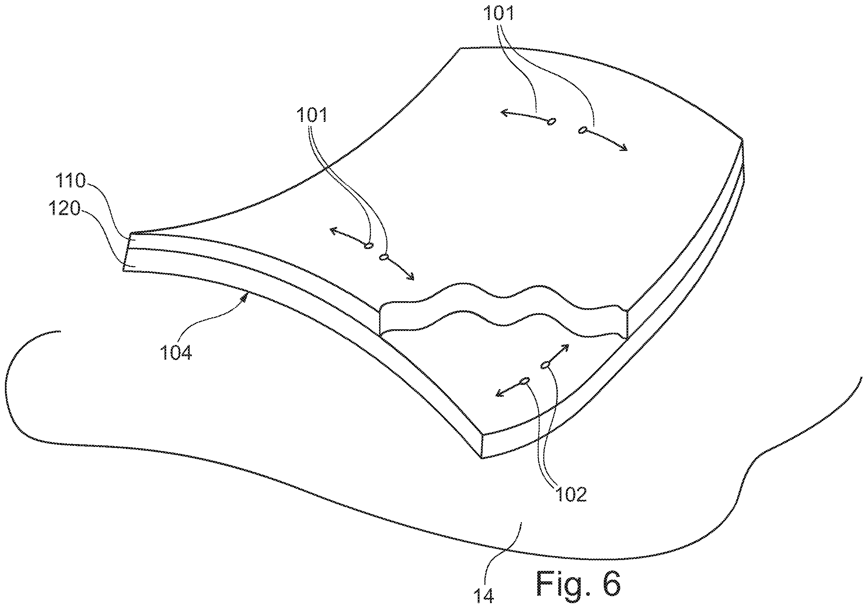

Die in Figur 6 gezeigte Ausführungsform zeigt ebenfalls einen Rotorblattaktuator mit zwei aktiven Schichten. Die beiden aktiven Schichten weisen jedoch Betätigungsrichtungen auf, die voneinander verschieden sind, und bei einer Betätigung der Aktuatorschichten zu einer tordierenden Krümmung führt.

An dieser Stelle sei angemerkt, dass selbstverständlich auch die in Figuren 5 und 6 gezeigten Ausführungsformen eine dritte passive Schicht 130 aufweisen können, die zwischen den beiden aktiven Schichten 110, 120 angeordnet ist. Ferner kann auch eine vierte passive Schicht 140 vorgesehen sein, die als Applikations- bzw. Substratschicht zwischen einer der aktiven Schichten 110, 120 und der Rotorblattdecke 14 angeordnet ist.

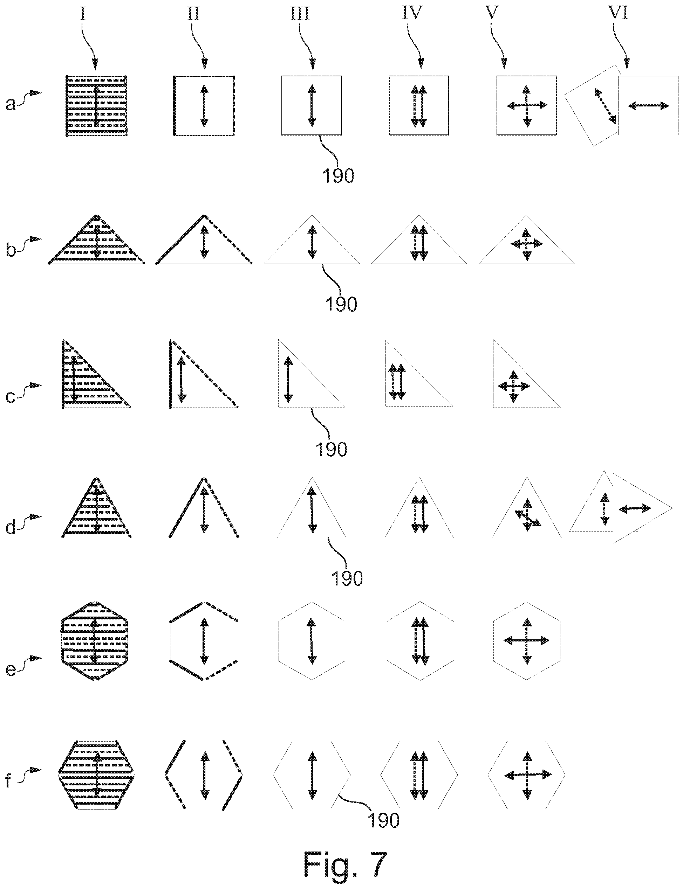

Figur 7 zeigt eine Vielzahl von möglichen Aktuatorformen bezüglich sowohl der Betätigungs- bzw. Verformungsrichtung als auch bezüglich der äußeren Kontur 190 und der Kontaktierung. Dabei sind grundsätzlich die Aktuatorkonturformen a, b, c, d, e, f denkbar mit unterschiedlichen Konfigurationen I, II, III, IV, V, VI. Dabei sind beispielsweise eine quadratische oder rechteckige Aktuatorform a möglich mit einer Kontaktierung für beispielsweise einen Piezoaktuator an gegenüberliegenden Kanten. Dabei stellt die durgezogene Linie den ersten Kontaktpol und die gestrichelte Linie den zweiten Kontaktpol dar. Die Konfiguration I a ermöglicht beispielsweise eine Verformung bzw. eine Längenänderung in eine erste Richtung, wobei der Aktuator an seitlich gegenüberliegenden Flächen betätigt wird. Ein Aktuator kann dabei selbstverständlich auch rechteckig ausgestaltet sein. In der Spalte II sind die entsprechenden Aktuatoren dargestellt lediglich mit der Außenkontaktierung eines ersten Kontaktpoles mit einer durchgezogenen Linie sowie eines zweiten Kontaktpoles in einer gestrichelten Linie. In der Spalte III ist eine erste Aktuatorausgestaltung eines einlagigen Aktuators dargestellt, der eine Verformungsrichtung bzw. eine Längenänderungsrichtung aufweist. In der Spalte IV ist eine jeweilige Konfiguration eines Aktuators dargestellt, der als zweischichtiger Aktuator ausgeführt ist, wobei die erste Längenänderungsrichtung bzw. Verformungsrichtung parallel bzw. antiparallel zu der zweiten Verformungsrichtung bzw. Längenänderungsrichtung ist. In Spalte V ist eine jeweilige Konfiguration eines Aktuators dargestellt, bei der die beiden Verformungsrichtungen zueinander unterschiedlich sind, wobei die beiden Verformungsrichtungen nicht zwingend orthogonal zueinander liegen müssen. Ferner ist in Spalte VI eine Konfiguration dargestellt, bei der die beiden aktiven Schichten in einem beliebigen Winkel zueinander angeordnet sein können.

Bezüglich der äußeren Kontur sind neben der Konfiguration a auch eine Dreieckskonfiguration b möglich, bei der eine Kontaktierung eines hier gleichschenkligen Dreieckes über die beiden gleichen Schenkel erfolgt. Ferner ist auch eine Konfiguration c möglich, bei der die Kontaktierung zum einen über die Hypotenuse und zum anderen über eine Kathete eines rechtwinkligen Dreiecks erfolgt. In Konfiguration d ist ein gleichseitiges Dreieck vorgesehen, wobei die Kontaktierung über zwei der drei Seitenflächen erfolgt.

Ferner ist eine sechseckige Konfiguration in Form einer Wabe möglich. Eine Kontaktierung kann dabei zum einen in der Konfiguration e für den ersten Kontaktpol an einer ersten Seitenfläche und für den zweiten Kontaktpol an einer dazu benachbarten Seitenfläche erfolgen. Auf der jeweilig gegenüberliegenden Seitenfläche des Sechsecks befindet sich jeweils eine zweite Kontaktierungsfläche des jeweiligen Kontaktpols.

In der Konfiguration f befindet sich eine Kontaktfläche des ersten Kontaktpols auf einer ersten Seitenfläche sowie auf einer dieser gegenüberliegenden Seitenfläche und eine Kontaktfläche eines zweiten Kontaktpols auf einer zu der ersten Seitenfläche benachbarten Seitenfläche sowie einer dieser gegenüberliegenden Seitenfläche.

Auf diese Weise sind unterschiedliche Kontaktierungen und unterschiedliche Konfigurationsmuster möglich.

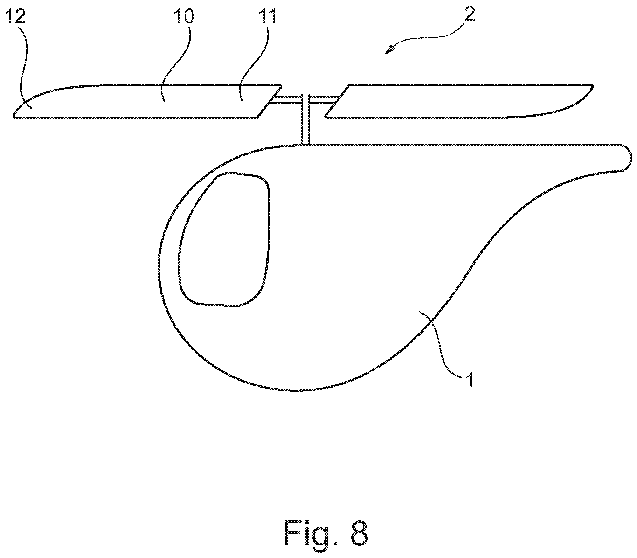

Figur 8 zeigt einen Helikopter einer beispielhaften Ausführungsform der Erfindung mit einem Rotor 2 sowie einer Rotorblattspitze 12 und einer Rotorblattwurzel 11.

Es sei angemerkt, dass der Begriff "umfassend" weitere Elemente oder Verfahrensschritte nicht ausschließt, ebenso wie die Begriffe "ein" und "eine" mehrere Elemente und Schritte nicht ausschließen.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Rotorblatt für einen Helikopter (1) mit
einer flexiblen Rotorblattdecke (14) und
einer Rotorblattaktuatoranordnung (200),
wobei die Rotorblattaktuatoranordnung in einem Bereich (A, B, C, D) entlang des Rotorblattes an die flexible Rotorblattdecke (14) angekoppelt ist und derart ausgelegt ist, dass die flexible Rotorblattdecke bei einer Betätigung der Rotorblattaktuatoranordnung bezogen auf eine Spannweite (21) eines Rotors (2) eines Helikopters (1) in einem ersten Bereich an einer Rotorblattspitze in eine vertikale Richtung (22) verformbar ist,
wobei die Rotorblattaktuatoranordnung (200) aufweist:
einen ersten Rotorblattaktuator (100) in einem im Bereich einer Rotorblattspitze (12) liegenden ersten Bereich (D), wobei eine Längenänderungsrichtung (101) des ersten Rotorblattaktuators im Wesentlichen in eine Spannweitenrichtung (21) verläuft,
einen zweiten Rotorblattaktuator (100) in einem bezüglich des ersten Bereiches in Richtung einer Rotorblattwurzel (11) liegenden zweiten Bereich (A), wobei eine Längenänderungsrichtung (101) des zweiten Rotorblattaktuators im Wesentlichen in eine Richtung quer zur Spannweitenrichtung (21) in einer Drehebene verläuft,
einen dritten Rotorblattaktuator (100) in einem zwischen dem ersten Bereich (D) und dem zweiten Bereich (A) liegenden dritten Bereich (B, C), und
wobei der dritte Rotorblattaktuator ausgestattet ist mit:
einer Aktuatoroberfläche (104), die ausgelegt ist zum Applizieren auf einer Oberfläche eines Rotorblattes,
einer ansteuerbaren aktiven ersten Schicht (110), die parallel zu der Aktuatoroberfläche angeordnet ist,
wobei die erste Schicht eine Ansteuerbarkeit aufweist, die bei einer Ansteuerung eine Längenänderung in eine erste Richtung (101) entlang der Aktuatoroberfläche hervorruft,
einer über der ansteuerbaren ersten Schicht (110) angeordneten ansteuerbaren aktiven zweiten Schicht (120),
wobei die zweite Schicht eine Ansteuerbarkeit aufweist, die bei einer Ansteuerung eine Längenänderung in eine zweite Richtung (102) entlang der Aktuatoroberfläche (104) hervorruft,
wobei die erste Schicht und die zweite Schicht derart miteinander gekoppelt sind, dass der Rotorblattaktuator (100) bei einer Längenänderung in eine erste Richtung (101) und eine davon verschiedene Längenänderung in eine zweite Richtung (102) eine veränderte Krümmung der Aktuatoroberfläche aufweist,
der Rotorblattaktuator (100) ausgelegt ist, in einem applizierten Zustand durch die Längenänderung eine Verformung der Oberfläche eines Rotorblattes hervorzurufen, und die erste Richtung (101) und die zweite Richtung (102) voneinander verschieden sind.

2. Rotorblatt nach Anspruch 1, wobei der Rotorblattaktuator (100) eine passive dritte Schicht (130) aufweist, die zwischen der ersten Schicht (110) und der zweiten Schicht (120) angeordnet ist.

3. Rotorblatt nach einem der Ansprüche 1 oder 2, wobei der Rotorblattaktuator (100) eine passive vierte Schicht (140) aufweist, die auf einer der zweiten Schicht (120) abgewandten Seite der ersten Schicht (110) angeordnet ist.

4. Rotorblatt nach einem der Ansprüche 1 bis 3, wobei die erste Richtung (101) und die zweite Richtung (102) senkrecht zueinander sind.

5. Rotorblatt nach einem der Ansprüche 1 bis 4, wobei die flexiblen Rotorblattdecke (14) dreidimensional verformbar ist und die Rotorblattaktuatoranordnung (200) derart ausgelegt ist und an die flexible Rotorblattdecke angekoppelt ist, dass die flexible Rotorblattdecke bei einer Betätigung der Rotorblattaktuatoranordnung dreidimensional verformbar ist.

6. Rotorblatt nach einem der Ansprüche 1 bis 5, wobei die flexiblen Rotorblattdecke (14) tordierend verformbar ist und die Rotorblattaktuatoranordnung (200) derart ausgelegt ist und an die flexible Rotorblattdecke angekoppelt ist, dass die flexible Rotorblattdecke bei einer Betätigung der Rotorblattaktuatoranordnung tordierend verformbar ist.

7. Rotorblatt nach einem der Ansprüche 1 bis 6, wobei die flexible Rotorblattdecke (14) in einem Bereich (13) zwischen einer Rotorblattspitze (12) und einer Rotorblattwurzel (11) bezogen auf eine Spannweite (21) tordierend verformbar ist und die Rotorblattaktuatoranordnung (200) derart ausgelegt ist und an einem Bereich zwischen einer Rotorblattspitze und einer Rotorblattwurzel angekoppelt ist, dass die flexible Rotorblattdecke bei einer Betätigung der Rotorblattaktuatoranordnung bezogen auf eine Spannweite tordierend verformbar ist.

8. Rotorblatt nach Anspruch 1 bis 7, wobei die Aktuatoroberfläche (104) im Inneren des Rotorblattes liegt.

9. Helikopter mit einem Rotorblatt (10) nach einem der Ansprüche 1 bis 8.

## Claims

1. Rotor blade for a helicopter (1), comprising:
a flexible rotor blade cover (14) and
a rotor blade actuator assembly (200),
wherein the rotor blade actuator assembly is coupled to the flexible rotor blade cover (14) in a region (A, B, C, D) along the rotor blade and is designed in such a manner that, during an actuation of the rotor blade actuator assembly, the flexible rotor blade cover can be deformed in relation to a span (21) of a rotor (2) of a helicopter (1) in a first region on a rotor blade tip in a vertical direction (22), wherein the rotor blade actuator assembly (200) comprises:
a first rotor blade actuator (100) in a first region (D) located in the region of a rotor blade tip (12), wherein a length change direction (101) of the first rotor blade actuator extends substantially in a span direction (21),
a second rotor blade actuator (100) in a second region (A) located in relation to the first region in the direction of a rotor blade root (11), wherein a length change direction (101) of the second rotor blade actuator extends substantially in a direction transverse to the span direction (21) in a rotation plane,
a third rotor blade actuator (100) in a third region (B, C) located between the first region (D) and the second region (A), and
wherein the third rotor blade actuator is equipped with:
an actuator surface (104) which is designed for application on a surface of a rotor blade,
an activatable active first layer (110) which is arranged in parallel with the actuator surface,
wherein the first layer has an activation capability which, during an activation, produces a change in length in a first direction (101) along the actuator surface,
an activatable active second layer (120) which is arranged above the activatable first layer (110),
wherein the second layer has an activation capability which, during an activation, produces a change in length in a second direction (102) along the actuator surface (104),
wherein the first layer and the second layer are coupled together such that, in the event of a change in length in a first direction (101) and a different change in length in a second direction (102), the rotor blade actuator (100) has a changed curvature of the actuator surface, the rotor blade actuator (100) is designed to produce a deformation of the surface of a rotor blade in an applied state by means of the change in length, and the first direction (101) and the second direction (102) are different from one another.

2. Rotor blade as claimed in claim 1, wherein the rotor blade actuator (100) has a passive third layer (130) which is arranged between the first layer (110) and the second layer (120).

3. Rotor blade actuator as claimed in any one of claims 1 or 2, wherein the rotor blade actuator (100) has a passive fourth layer (140) which is arranged on a side of the first layer (110) facing away from the second layer (120).

4. Rotor blade as claimed in any one of claims 1 to 3, wherein the first direction (101) and the second direction (102) are perpendicular to one another.

5. Rotor blade as claimed in any one of claims 1 to 4, wherein the flexible rotor blade cover (14) can be deformed three-dimensionally and the rotor blade actuator assembly (200) is designed and coupled to the flexible rotor blade cover such that the flexible rotor blade cover can be deformed three-dimensionally during an actuation of the rotor blade actuator assembly.

6. Rotor blade as claimed in any one of claims 1 to 5, wherein the flexible rotor blade cover (14) can be deformed in a twisting manner and the rotor blade actuator assembly (200) is designed and coupled to the flexible rotor blade cover such that the flexible rotor blade cover can be deformed in a twisting manner during an actuation of the rotor blade actuator assembly.

7. Rotor blade as claimed in any one of claims 1 to 6, wherein the flexible rotor blade cover (14) can be deformed in a twisting manner in relation to a span (21) in a region (13) between a rotor blade tip (12) and a rotor blade root (11) and the rotor blade actuator assembly (200) is designed and coupled at a region between a rotor blade tip and a rotor blade root such that the flexible rotor blade cover can be deformed in a twisting manner in relation to a span during an actuation of the rotor blade actuator assembly.

8. Rotor blade as claimed in claims 1 to 7, wherein the actuator surface (104) is located in the interior of the rotor blade.

9. Helicopter comprising a rotor blade (10) as claimed in any one of claims 1 to 8.

## Revendications

1. Pale de rotor pour un hélicoptère (1), comportant :
un dessus de pale de rotor flexible (14) et
un agencement actionneur de pale de rotor (200),
dans laquelle l'agencement actionneur de pale de rotor est couplé dans une zone (A, B, C, D) le long de la pale de rotor au niveau du dessus de pale de rotor flexible (14) et est conçu de telle sorte que le dessus de pale de rotor flexible est déformable dans une direction verticale (22) lors d'un actionnement de l'agencement actionneur de pale de rotor par rapport à une envergure (21) d'un rotor (2) d'un hélicoptère (1) dans une première zone au niveau d'un bout de pale de rotor,
dans laquelle l'agencement actionneur de pale de rotor (200) présente :
un premier actionneur de pale de rotor (100) dans une première zone (D) située au niveau d'un bout de pale de rotor (12),
une direction de variation de longueur (101) du premier actionneur de pale de rotor s'étendant sensiblement dans une direction d'envergure (21),
un deuxième actionneur de pale de rotor (100) dans une deuxième zone (A) située par rapport à la première zone en direction d'une racine de pale de rotor (11),
une direction de variation de longueur (101) du deuxième actionneur de pale de rotor s'étendant sensiblement dans une direction transversale à la direction d'envergure (21) dans un plan de rotation,
un troisième actionneur de pale de rotor (100) dans une troisième zone (B, C) située entre la première zone (D) et la deuxième zone (A), et
dans laquelle le troisième actionneur de pale de rotor est muni de :
une surface d'actionneur (104), conçue pour être appliquée sur une surface d'une pale de rotor,
une première couche active pilotable (110), qui est disposée parallèlement à la surface d'actionneur,
la première couche présentant une pilotabilité qui provoque, lors d'un pilotage, une variation de longueur dans une première direction (101) le long de la surface d'actionneur, une deuxième couche active pilotable (120) disposée au-dessus de la première couche pilotable (110), la deuxième couche présentant une pilotabilité qui provoque, lors d'un pilotage, une variation de longueur dans une seconde direction (102) le long de la surface d'actionneur (104),
dans laquelle la première couche et la deuxième couche sont couplées l'une à l'autre de telle sorte que l'actionneur de pale de rotor (100) présente, lors d'une variation de longueur dans une première direction (101) et une variation de longueur différente de cette dernière dans une seconde direction (102), un changement de courbure de la surface d'actionneur, l'actionneur de pale de rotor (100) est conçu pour provoquer, dans un état appliqué par la variation de longueur, une déformation de la surface d'une pale de rotor,
et la première direction (101) et la seconde direction (102) sont différentes l'une de l'autre.

2. Pale de rotor selon la revendication 1, dans laquelle l'actionneur de pale de rotor (100) présente une troisième couche passive (130) qui est disposée entre la première couche (110) et la deuxième couche (120).

3. Pale de rotor selon une des revendications 1 ou 2, dans laquelle l'actionneur de pale de rotor (100) présente une quatrième couche passive (140) qui est disposée sur une face de la première couche (110) opposée à la deuxième couche (120).

4. Pale de rotor selon une des revendications 1 à 3, dans laquelle la première direction (101) et la deuxième direction (102) sont perpendiculaires l'une à l'autre.

5. Pale de rotor selon une des revendications 1 à 4, dans laquelle le dessus de pale de rotor flexible (14) est déformable en trois dimensions et l'agencement actionneur de pale de rotor (200) est conçu et couplé au niveau du dessus de pale de rotor flexible de telle sorte que le dessus de pale de rotor flexible est déformable en trois dimensions lors d'un actionnement de l'agencement actionneur de pale de rotor.

6. Pale de rotor selon une des revendications 1 à 5, dans laquelle le dessus de pale de rotor flexible (14) est déformable par torsion et l'agencement actionneur de pale de rotor (200) est conçu et couplé au niveau du dessus de pale de rotor flexible de telle sorte que le dessus de pale de rotor flexible est déformable par torsion lors d'un actionnement de l'agencement actionneur de pale de rotor.

7. Pale de rotor selon une des revendications 1 à 6, dans laquelle le dessus de pale de rotor flexible (14) est déformable par torsion dans une zone (13) entre un bout de pale de rotor (12) et une racine de pale de rotor (11) par rapport à une envergure (21) et l'agencement actionneur de pale de rotor (200) est conçu et couplé au niveau d'une zone entre un bout de pale de rotor et une racine de pale de rotor de telle sorte que le dessus de pale de rotor flexible est déformable par torsion lors d'un actionnement de l'agencement actionneur de pale de rotor par rapport à une envergure.

8. Pale de rotor selon une revendication 1 à 7, dans laquelle la surface d'actionneur (104) est située à l'intérieur de la pale de rotor.

9. Hélicoptère comprenant une pale de rotor (10) selon une des revendications 1 à 8.
